# EUROPÄISCHE PATENTANMELDUNG

(11) **EP 2 865 471 A1**
(43) Veröffentlichungstag der Anmeldung: **29.04.2015**
(21) Anmeldenummer: 14183875.5
(22) Anmeldetag: 08.09.2014
(51) Int. Cl.: B23B 31/12

(54) **Bohrfutter**

(30) Priorität: 24.10.2013 DE 102013111731
(71) Anmelder: Röhm GmbH, 89567 Sontheim (DE)
(72) Erfinder: Thiemann, Christian, 72525 Münsingen (DE); Schenk, Peter, 89168 Niederstotzingen (DE); Hengsberger, Patrick, 89567 Sontheim (DE)
(74) Vertreter: Hentrich Patentanwälte PartG mbB

(57) **Zusammenfassung**

Die Erfindung betrifft ein Bohrfutter mit einem Futterkörper (3), an dem ein Gewindering (13) geführt ist, der zum Verstellen von in dem Futterkörper (3) geführten Spannbacken (4) mit einem Gewinde im Eingriff mit den Spannbacken (4) zugeordneten Zahnreihen (15) steht, sowie mit einer den Futterkörper (3) umgebenden und mit dem Gewindering (13) drehmomentübertragend koppelbaren Spannhülse (2), die durch eine Verriegelungseinrichtung (21) mit dem Futterkörper (3) koppelbar ist. Die Verriegelungseinrichtung (21) ist durch eine eine Sperrverzahnung (18) aufweisende und mit dem Gewindering (13) drehfest gekoppelte Sperrhülse (16), die relativ zu dem Gewindering (13) und der Spannhülse (2) zwischen einer Bohrkonfiguration und einer Spannkonfiguration axial verschiebbar ist, und durch eine dem Futterkörper (3) zugeordnete Gegenverzahnung (19) gebildet.

## Beschreibung

Die Erfindung betrifft ein Bohrfutter mit einem Futterkörper, an dem ein Gewindering geführt ist, der zum Verstellen von in dem Futterkörper geführten Spannbacken mit einem Gewinde im Eingriff mit den Spannbacken zugeordneten Zahnreihen steht, sowie mit einer dem Futterkörper umgebenden und mit dem Gewindering drehmomentübertragend koppelbaren Spannhülse, die durch eine Verriegelungseinrichtung mit dem Futterkörper koppelbar ist.

Derartige Bohrfutter mit einer Verriegelungseinrichtung sind beispielsweise aus der DE 198 32 891 A1 bekannt. Bei einer ersten Ausführungsform des in der DE 198 32 891 A1 gezeigten Bohrfutters ist die Verriegelung in jedem Betriebszustand aktiviert, also auch dann, wenn die Spannbacken noch nicht an einem zu spannenden Werkzeugschaft anliegen. Bei einem ungeübten Heimwerker können leicht Irritationen hervorgerufen werden, da durch die stets aktivierte Verriegelungseinrichtung bereits bei dem Verstellen der Spannbacken - also wenn die Spannbacken noch nicht zur Anlage an einen zu spannenden Werkzeugschaft gelangt sind - Klick-Geräusche entstehen, die häufig mit Nachspanngeräuschen assoziiert werden. Dadurch besteht das Problem, dass der Spannvorgang des zu spannenden Werkzeugschaftes unter Umständen zu früh beendet wird, was zu einem nicht sicher eingespannten Werkzeugschaft führen kann.

In einer weiteren Ausführungsform des in der DE 198 32 891 A1 gezeigten Bohrfutters findet der Eingriff der Verriegelungseinrichtung erst zum Ende der Spannvorganges statt. Hierzu ist die Spannhülse begrenzt verdrehbar und axial verstellbar an dem Gewindering gelagert, so dass sich die Spannhülse bei Anlage der Spannbacken an einem zu spannenden Werkzeugschaft relativ zu dem Gewindering verdreht und dabei axial verstellt wird. Hierdurch wird nun die Verrieglungseinrichtung aktiviert, die zwischen der Spannhülse und dem Futterkörper gebildet ist. Bei dieser Ausführungsform hat sich jedoch gerade die axiale Verstellbarkeit der Spannhülse als nachteilig erwiesen, da hierdurch ein Eindringen von Verunreinigungen in das Innere des Futterkörpers nicht gänzlich ausgeschlossen werden kann. Zudem haben sich auch bei dem Einsatz der vorgenannten Verriegelungseinrichtung im oberen Leistungsbereich Probleme hinsichtlich der Standfestigkeit der Verriegelungseinrichtung gezeigt. Da zudem die axial verstellbare Spannhülse stets ein gewisses Spiel aufweist, das auch als Kopfspiel bezeichnet wird, kann eine definierte Schaltung zwischen einer Bohrkonfiguration und einer Spannkonfiguration unter Umstände nicht gewährleitstet werden.

Die Aufgabe der vorliegenden Erfindung liegt daher darin, die oben aufgeführten Nachteile zu reduzieren.

Diese Aufgabe wird nach der Erfindung bei einem Bohrfutter der eingangs genannten Art dadurch gelöst, dass die Verriegelungseinrichtung durch eine eine Sperrverzahnung aufweisende und mit dem Gewindering drehfest gekoppelte Sperrhülse, die relativ zu dem Gewindering und der Spannhülse axial zwischen einer Bohrkonfiguration und einer Spannkonfiguration verschiebbar ist, und durch eine dem Futterkörper zugeordnete Gegenverzahnung gebildet ist.

Durch die Verriegelungseinrichtung, die im Wesentlichen durch die der Sperrhülse zugeordnete Sperrverzahnung und durch die dem Futterkörper zugeordnete Gegenverzahnung gebildet ist, wird auf einfache Art und Weise erreicht, dass die aus dem Stand der Technik bekannte und problembehaftete Funktionsüberlastung der Spannhülse nicht länger gegeben ist, da diese lediglich gedreht und nicht axial verstellt werden muss. Dadurch kann das erfindungsgemäße Bohrfutter insbesondere auch an Bohrmaschinen des hohen Leistungssegments eingesetzt werden. Durch eine Drehung der Spannhülse kann die Verriegelungseinrichtung einfach zwischen einer Bohrkonfiguration, in der die Sperrverzahnung im Eingriff mit der Gegenverzahnung steht, und einer Spannungskonfiguration, in der der Verzahnungseingriff aufgehoben ist, verstellt werden.

Als besonders vorteilhaft hat es sich hierbei auch gezeigt, wenn der zwischen der Sperrverzahnung der Sperrhülse und der Gegenverzahnung gebildete Verzahnungseingriff in axialer Richtung wirkt. Hierdurch wird insbesondere gewährleistet, dass in der Bohrkonfiguration bei einer geeigneten Gestaltung der Gegenverzahnung und der Sperrverzahnung ein Nachspannen der Spannbacken möglich bleibt, da die Sperrverzahnung ohne Eingriff des Nutzers leicht axial aus der Gegenverzahnung ausrücken kann. Zudem ist durch die axiale Wirkung der Verriegelungseinrichtung auch gewährleistet, dass die Verriegelungseinrichtung auch bei starken Vibrationen oder bei hoher Dynamik stets sicher geschlossen bleibt.

Weiterhin wird dadurch auch auf einfache Art und Weise ein Nachspannen ermöglicht. Im Rahmen der Erfindung ist jedoch auch ein radialer Verzahnungseingriff vorgesehen, bei dem jedoch in der Bohrkonfiguration eine Nachspannmöglichkeit nicht gegeben ist, weil ein Ausrücken der Sperrverzahnung aus der Gegenverzahnung ohne den Eingriff des Nutzers nicht möglich ist.

Bewährt hat es sich auch, wenn die Sperrhülse durch ein elastisches Rückstellelement beaufschlagt ist. Hierdurch wird insbesondere gewährleistet, dass auf die Sperrhülse stets eine in Richtung der Gegenverzahnung wirkende Kraft ausgeübt wird, wodurch die Betriebssicherheit des erfindungsgemäßen Bohrfutters erhöht wird. In diesem Zusammenhang hat es sich auch besonders bewährt, wenn das elastische Rückstellelement durch eine Wellenfeder gebildet ist. Insbesondere durch die Wahl der Wellenfeder kann die zum Spannen der Spannbacken und zum Lösen der Verriegelungseinrichtung benötigte Kraft-beispielsweise beim Nachspannen - gezielt eingestellt werden.

Als vorteilhaft hat es sich auch erwiesen, wenn der Sperrhülse mindestens eine Steuernocke zugeordnet ist, die zur axialen Verstellung der Sperrhülse durch eine der Spannhülse mittelbar oder unmittelbar zugeordnete Steuerkurve beaufschlagbar ist. Somit kann durch ein Verdrehen der Spannhülse die an dem Gewindering gelagerte Sperrhülse über die Steuerkurve einfach axial zwischen der Spannkonfiguration und der Bohrkonfiguration geschaltet werden. In der Spannkonfiguration ist eine Relativdrehung zwischen dem Gewindering und dem Futterkörper möglich, wodurch die in dem Futterkörper geführten Spannbacken axial verstellt werden. Dies kann entweder durch den Antrieb einer mit dem Futterkörper gekoppelten Bohrmaschine oder durch das Drehen der Spannhülse erfolgen. Als günstig hat es sich auch gezeigt, wenn die Steuerkurve durch mindestens einen die Bohrkonfiguration und/oder die Spannkonfiguration definierenden Rastsitz begrenzt ist. In den Rastsitz kann nun die der Sperrhülse zugeordnete Steuernocke eingreifen, wodurch die Sperrhülse jeweils wohldefinierte Endlagen aufweist. Durch die Rastsitze ist beispielsweise sichergestellt, dass bei der Verstellung des Bohrfutter aus der Spannkonfiguration in die Bohrkonfiguration - also beim Spannen eines Werkstückes - erst nach dem Erreichen eines bestimmten Spannmomentes die Steuernocke aus dem Rastsitz ausgerückt wird und durch die der Spannhülse mittelbar oder unmittelbar zugeordnete Steuerkurve axial in Richtung der Gegenverzahnung verstellt wird, wodurch der Verzahnungseingriff hergestellt wird. Danach kann die Steuernocke in den die Bohrkonfiguration definierenden Rastsitz eingerückt werden und ist darin gesichert. Durch den Rastsitz ist zudem auch gewährleistet, dass in der Bohrkonfiguration eine Anschlagsfläche bereitsteht, die in Verbindung mit der Steuernocke ein Nachspannen der Spannbacken ermöglicht. Bei dem Nachspannen wird in der Bohrkonfiguration die Verriegelungseinrichtung leicht gelöst - die Sperrhülse wird also ohne einen Eingriff des Nutzers gegen das elastische Rückstellelement verschoben - und die Spannbacken werden nachgespannt.

Aus Montagegründen hat es sich zudem auch als günstig gezeigt, wenn die Gegenverzahnung an einem dem Kopplungsglied zugeordneten Verzahnungsring ausgebildet ist. So kann der Verzahnungsring einfach auf das Kopplungsglied aufgepresst werden und bildet dadurch gleichzeitig eine axiale Sicherung für die mit dem Gewindering drehfest gekoppelte Sperrhülse.

Vorteilhaft ist es weiterhin, wenn der Verzahnungsring axial gegen ein an dem Futterkörper abgestütztes Federelement verstellbar ist. Hierdurch wird insbesondere gewährleistet, dass der Verzahnungseingriff, der zwischen der Sperrverzahnung und der Gegenverzahnung gebildet ist, auch dann vollständig gegeben ist, wenn das auf die Sperrverzahnung wirkende elastische Rückstellelement gegen die Wirkrichtung des Verzahnungseingriffes gerichtet ist und zwischen dem Futterkörper und der Spannhülse auftretendes Kopfspiel den Verzahnungseingriff partiell löst.

Als günstig hat es sich auch gezeigt, wenn der Gewindering mehrteilig aus einem hälftig geteilten, ein Innengewinde tragenden Ring und aus einer den hälftig geteilten Ring verbindenden Verzahnungshülse gebildet ist, die drehfest mit der Sperrhülse gekoppelt ist. Somit kann der Gewindering auf einfache Art und Weise mit der Sperrhülse verbunden werden, um insbesondere in der Bohrkonfiguration eine Relativdrehung zwischen dem Gewindering und dem Futterkörper, die ein ungewolltes Lösen der Spannbacken zur Folge hätte, zu verhindern. Zudem kann der hälftig geteilte Ring einfach in eine im Futterkörper ausgebildete Nut eingesetzt werden und dann durch die Verzahnungshülse zu dem Gewindering verbunden werden. Im Rahmen der Erfindung ist es jedoch auch vorgesehen, dass der das Innengewinde tragende Ring einstückig gebildet ist und insbesondere auch, dass der Ring und die Verzahnungshülse - also der Gewindering - ebenfalls einstückig gebildet sind. In einer alternativen Ausführungsform der Erfindung ist es zudem vorgesehen, dass das mit den Spannbacken im Eingriff stehende Gewinde als ein Außengewinde gebildet ist.

Für den Einsatz bei Bohrmaschinen aus einer hohen Leistungsklasse hat es sich auch als vorteilhaft erwiesen, wenn die an der Sperrhülse ausgebildete Sperrverzahnung und die dem Futterkörper zugeordnete und zu der Sperrverzahnung korrespondierende Gegenverzahnung aus einer Vielzahl von jeweils eine Verriegelungsflanke und eine Nachspannflanke aufweisenden Sperrzähnen gebildet ist. Durch eine geeignete Wahl der Steigungen der Verriegelungsflanken und der Nachspannflanken können die zum Nachspannen und Notöffnen benötigten Kräfte eingestellt werden. Je steiler die Steigung der Verriegelungsflanke ist desto größer ist der zum Lösen benötigte Kraftaufwand. In diesem Zusammenhang hat es sich als vorteilhaft erwiesen, wenn die Steigung der Verriegelungsflanke des zwischen der Sperrverzahnung und der Gegenverzahnung gebildeten Verzahnungseingriffes größer oder gleich der Steigung der Nachspannflanke ist. Somit ist ein Nachspannen des Bohrfutters stets möglich.

Als vorteilhaft hat es sich auch erwiesen, wenn die Steigung der Verriegelungsflanke größer oder gleich 45°, bevorzugt größer als 60° und besonders bevorzugt größer als 80° ist. Zwar wird mit größer werdender Steigung der Verriegelungsflanke ein höherer Kraftaufwand notwendig, um eine Notöffnung des erfindungsgemäßen Bohrfutters in der Bohrkonfiguration zu ermöglichen, jedoch können mit größer werdender Steigung auch höhere dynamische Einflüsse der verwendeten Bohrmaschine abgefangen werden.

Um möglichst große dynamische Einflüsse der verwendeten Bohrmaschine abfangen zu können, hat es sich auch als vorteilhaft erwiesen, wenn die Verriegelungsflanken der Sperrzähne parallel zu den Nachspannflanken orientiert sind. Durch die hierdurch entstehende Steigung von 90° lässt sich insbesondere gewährleisten, dass ein ungewolltes Entriegeln und/oder Nachspannen des Bohrfutters ausgeschlossen ist.

Als günstig hat es sich auch gezeigt, wenn die Neigung der Spannbacken bezogen auf die Futterachse einem Bereich entstammt, der bevorzugt zwischen 15° und 25° liegt und der besonders bevorzugt bei 20° liegt. Hierdurch lassen sich besonders kompakte Bohrfutter realisieren, wodurch die Kopflastigkeit einer mit dem Bohrfutter ausgestatteten Bohrmaschine reduziert wird.

Im Folgenden wird die Erfindung an in den Zeichnungen dargestellten Ausführungsbeispielen näher erläutert; es zeigen:
- Fig. 1: eine Seitenansicht einer ersten Ausführungsform des erfindungsgemäßen Bohrfutters,
- Fig. 2: eine Draufsicht auf das Bohrfutter mit geschlossenen Spannbacken,
- Fig. 3: einen Längsschnitt entlang des Schnittes III-III aus der Figur 2,
- Fig. 4: eine Explosionsdarstellung der ersten Ausführungsform,
- Fig. 5: eine weitere Explosionsdarstellung der ersten Ausführungsform,
- Fig. 6: eine teilgeschnittene Ansicht des Futterkörpers der ersten Ausführungsform,
- Fig. 7: eine Seitenansicht des Futterkörpers,
- Fig. 8: eine Schnittansicht entlang des Schnittes VIII - VIII aus der Figur 7,
- Fig. 9: eine perspektivische Ansicht des Futterkörpers,
- Fig. 10: eine teilgeschnittene Ansicht des erfindungsgemäßen Bohrfutters,
- Fig. 11: das Detail XI aus der Figur 10,
- Fig. 12: eine Teilansicht der ersten Ausführungsform,
- Fig. 13: das Detail XIII aus der Figur 12 in der Bohrkonfiguration,
- Fig. 14: eine teilgeschnittene Ansicht der ersten Ausführungsform in der Spannkonfiguration,
- Fig. 15: das Detail XV aus der Figur 14,
- Fig. 16: eine teilgeschnittene Ansicht des rückwärtigen Ende der ersten Ausführungsform,
- Fig. 17: ein Verzahnungseingriff mit dem Detail XVIII,
- Fig. 18.1-4: das Detail XVIII aus der Figur 17 mit unterschiedlich gestalteten Verzahnungseingriffen,
- Fig. 19: eine Explosionsdarstellung einer weiteren Ausführungsform des erfindungsgemäßen Bohrfutters,
- Fig. 20: eine Draufsicht auf ein Bohrfutter,
- Fig. 21.1-3: Längsschnitte entlang des Schnittes XXI - XXI aus der Figur 20 durch weitere Ausführungsformen des erfindungsgemäßen Bohrfutters,
- Fig. 22: eine teilgeschnittene Ansicht einer fünften Ausführungsform des erfindungsgemäßen Bohrfutters,
- Fig. 23.1-3: verschiedene Ansichten eines Bohrfutters in der Spannfiguration,
- Fig. 24.1-3: verschiedene Ansichten eines Bohrfutters in der Bohrkonfiguration,
- Fig. 25: eine Draufsicht auf eine weitere Ausführungsform mit trapezförmigen Spannbacken,
- Fig. 26: eine Seitenansicht des Bohrfutters aus Fig. 25
- Fig. 27: eine Seitenansicht des Futterkörpers mit trapezförmigen Spannbacken,
- Fig. 28: eine Schnittansicht entlang des Schnittes XXVIII - XXVIII aus der Figur 27, und
- Fig. 29: eine perspektivische Ansicht des Futterkörpers aus der Richtung XXIX aus Fig. 27.

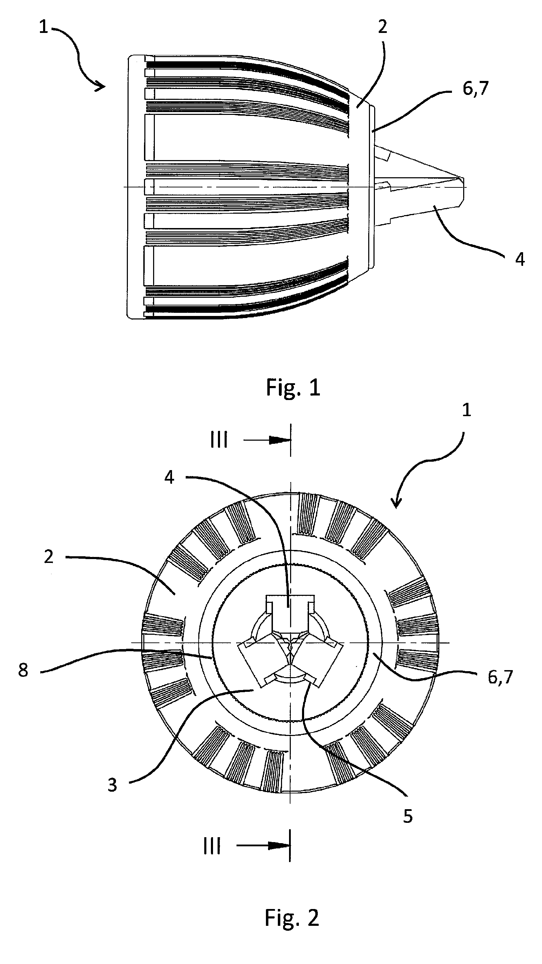

Figur 1 zeigt eine Seitenansicht einer ersten Ausführungsform des erfindungsgemäßen Bohrfutters 1. Neben einer Spannhülse 2, die einen in der Zeichnung nicht dargestellten Futterkörper 3 umgibt, sind aus der Figur 1 auch Spannbacken 4 ersichtlich, die in dem Futterkörper 3 in Führungsaufnahmen 5 geführt sind. Die Spannhülse 2 ist an der den Spannbacken 4 zugewandten Stirnseite durch eine einen Ringbund 6 aufweisende Sicherungshülse 7 axial gesichert.

Figur 2 zeigt eine Draufsicht auf das die Spannbacken 4 aufweisende Ende des Bohrfutters 1. Neben der Spannhülse 2 sind aus der in der Figur 2 dargestellten Draufsicht insbesondere auch der Futterkörper 3 und die Sicherungshülse 7 sichtbar, die mittels einer innenumfangsseitig ausgebildeten Verzahnung 8 auf den Futterkörper 3 aufgepresst ist und die Spannhülse 2 durch den Ringbund 6 axial sichert. Zudem wird durch die Sicherungshülse 7 der Futterkörper 3 in dem vorderen Teil verstärkt.

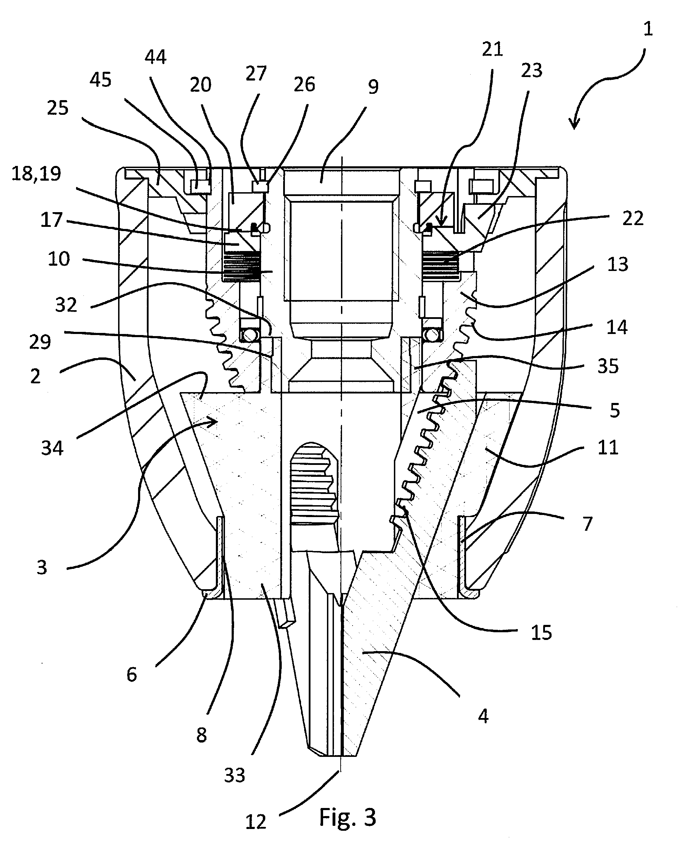

Figur 3 zeigt in einem Längsschnitt eine Schnittansicht der ersten Ausführungsform entlang des Schnittes III - III aus der Figur 2. Hierbei ist zu beachten, dass der Futterkörper 3 mehrteilig aus einem eine Spindelaufnahme 9 aufweisenden Kopplungsteil 10 und aus einem aus Kunststoff gefertigten Backenführungsteil 11 gebildet ist, in dem die Führungsaufnahmen 5 zur Führung der Spannbacken 4 geneigt zur Futterachse 12 verlaufen. Zur Verstellung der Spannbacken 4 ist in dem gezeigten Ausführungsbeispiel ein Gewindering 13 vorgesehen, der mit einem Außengewinde 14 im Eingriff mit Zahnreihen 15 steht, die den Spannbacken 4 zugeordnet sind. An dem Gewindering 13 ist eine mit diesem drehfest verbundene und axial verschiebbare Sperrhülse 16 gelagert, die in der ersten Ausführungsform auch als Sperrring 17 bezeichnet wird. Der Sperrring 17 weist eine axial wirkende Sperrverzahnung 18 zur Bildung eines Verzahnungseingriffes mit einer dem Futterkörper 3 zugeordneten Gegenverzahnung 19 auf. Die Gegenverzahnung 19 ist in dem gezeigten Ausführungsbeispiel an einem dem Kopplungsglied 10 zugeordneten Verzahnungsring 20 ausgebildet. Durch die Sperrverzahnung 18 und die hierzu korrespondierende Gegenverzahnung 19 ist eine Verriegelungseinrichtung 21 gegeben, mit der der Futterkörper 3 drehfest mit dem Gewindering 13 gekoppelt werden kann, um ein unbeabsichtigtes Lösen der Spannbacken 4 zu verhindern. Der an dem Gewindering 13 axial verschiebbar gelagerte Sperrring 17 ist über ein elastisches Rückstellelement 22 an dem Gewindering 13 abgestützt.

Zur Verstellung des Sperrringes 17 aus der Spannkonfiguration, in der die Sperrverzahnung 18 des Sperrringes 17 außerhalb des Eingriffes mit der dem Verzahnungsring 20 zugeordneten Gegenverzahnung 19 steht, in die Bohrkonfiguration, in der der Verzahnungseingriff zwischen der Sperrverzahnung 18 und der Gegenverzahnung 19 hergestellt ist, ist dem Sperrring 17 eine Steuernocke 23 zugeordnet, die durch eine Steuerkurve 24 beaufschlagbar ist, die an einer der Spannhülse 2 zugeordneten Abschlussscheibe 25 ausgebildet ist. Die in der Abschlussscheibe 25 ausgebildete Steuerkurve 24 ist in dem gezeigten Ausführungsbeispiel durch jeweils einen die Bohrkonfiguration und die Spannkonfiguration definierenden Rastsitz 28 begrenzt. Durch eine Drehung der Spannhülse 2 wird die Verriegelungseinrichtung 21 einfach zwischen der Bohrkonfiguration und der Spannkonfiguration verstellt. Die Neigung der Spannbacken 4 bezogen auf die Futterachse 12 liegt in dem gezeigten Ausführungsbeispiel bei 20°, was in einem sehr kompakten Bohrfutter resultiert. Zur Sicherung des Verzahnungsringes 20 ist dem Kopplungsteil 10 eine erste Sicherungsnut 26 zugeordnet, in die ein erster Sprengring 27 eingesetzt ist, der die axiale Lage des Verzahnungsringes 20 fixiert. Die Abschlussscheibe 25 ist in dem gezeigten Ausführungsbeispiel drehfest mit der Spannhülse 2 verbunden und durch einen zweiten Sprengring 45 axial gesichert, der in eine zweite Sicherungsnut 44 eingesetzt ist, die in dem Gewindering 13 ausgebildet ist.

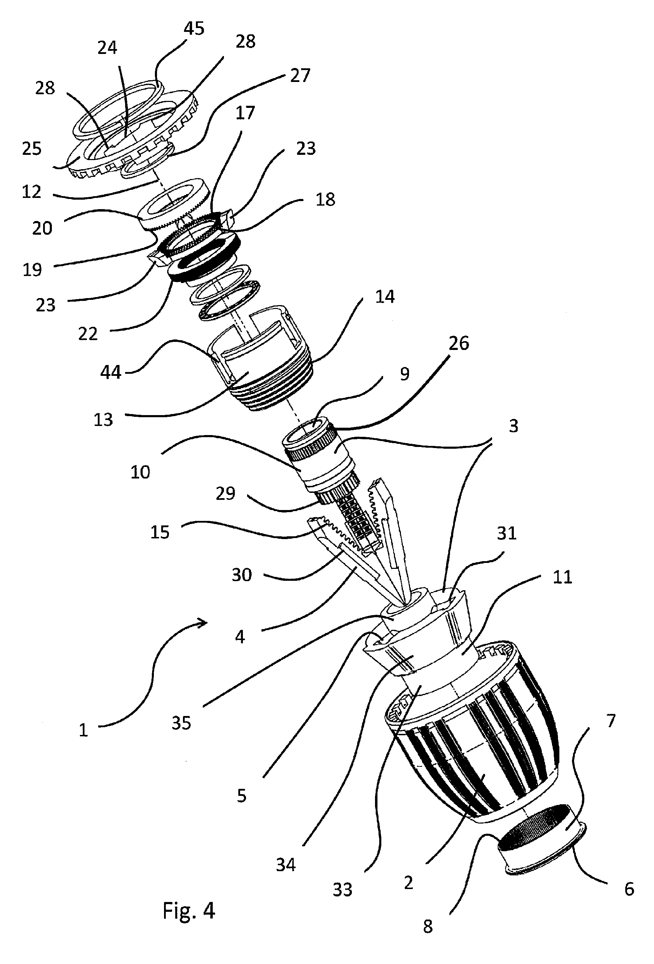

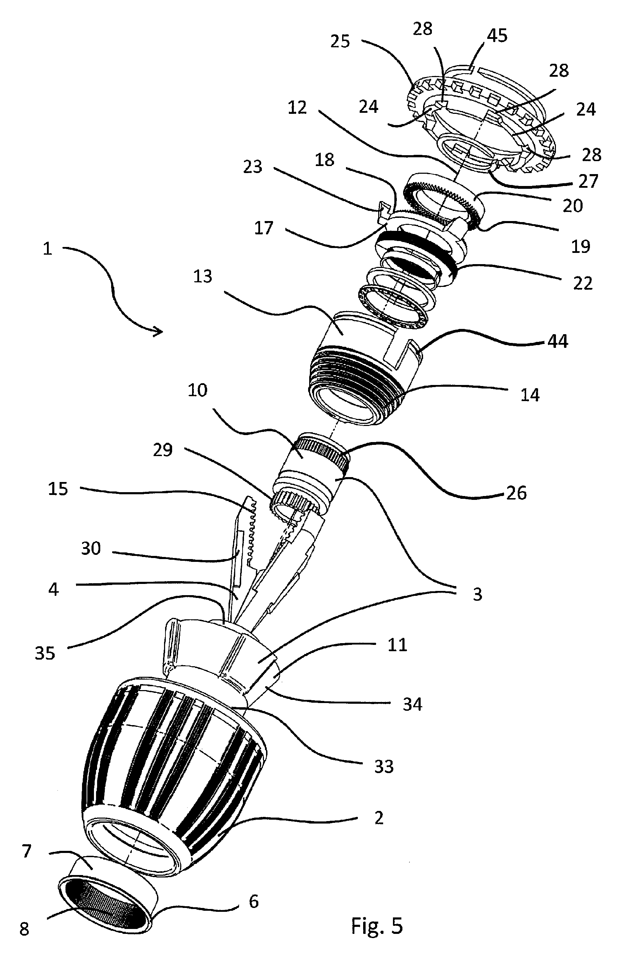

Figur 4 und Figur 5 zeigen aus unterschiedlichen Blickwinkeln jeweils eine Explosionsansicht der ersten Ausführungsform des erfindungsgemäßen Bohrfutters 1. Insbesondere aus der Figur 4 wird dabei auch der zweigeteilte Futterkörper 3 sichtbar, der aus dem aus Metall gefertigten Kopplungsteil 10 und dem aus Kunststoff gefertigten Backenführungsteil 11 gebildet ist. Dem Kopplungsteil 10 ist zur Kopplung mit dem Backenführungsteil 11 eine Sicherungsstruktur 29 zugeordnet, auf die das Backenführungsteil 11 bei der Montage aufgepresst und zusätzlich eingespritzt wird. Die in dem gezeigten Ausführungsbeispiel verwendeten Spannbacken 4 sind als Flachbacken ausgeführt und weisen an der von der Zahnreihe 15 wegweisenden Seite jeweils ein Führungsprofil 30 auf, das in dem gezeigten Ausführungsbeispiel einen rechteckigen Querschnitt aufweist und in Führungsnuten 31 eingesetzt werden kann, die in dem aus Kunststoff geformten Backenführungsteil 11 im Bereich der Führungsaufnahmen 5 ausgebildet sind.

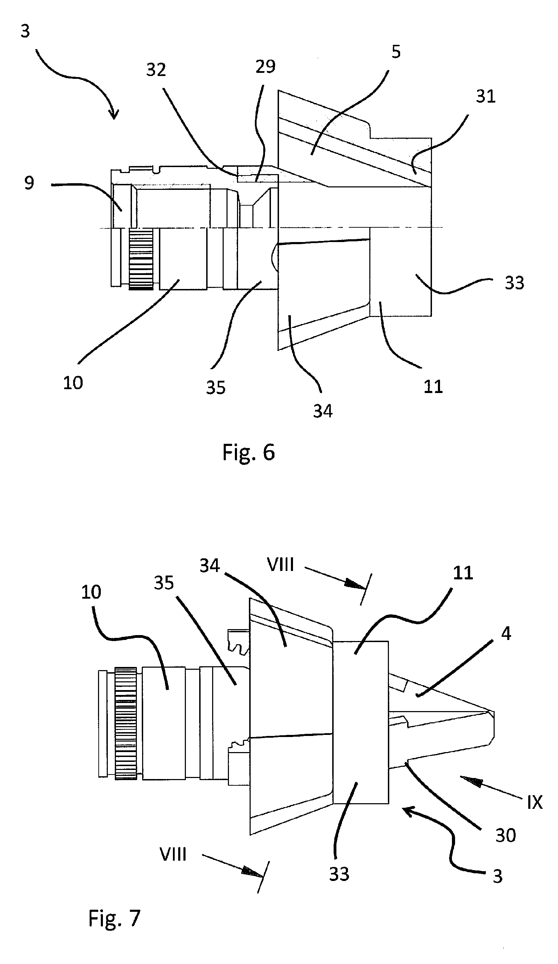

Figur 6 zeigt in einer teilgeschnittenen Ansicht den aus dem Kopplungsteil 10 und aus dem Backenführungsteil 11 gebildeten Futterkörper 3 der ersten Ausführungsform des erfindungsgemäßen Bohrfutters 1. Zu sehen ist in der in der Figur 5 dargestellten Ansicht, dass die Sicherungsstruktur 29, die an dem Kopplungsteil 10 ausgebildet ist, durch einen Kragen 32 axial begrenzt ist. Hierdurch wird beim Zusammenfügen des Futterkörpers 3 eine definierte Passung gewährleistet. Weiterhin sind aus der Figur 6 auch die geneigt zur Futterachse 12 verlaufenden Führungsaufnahmen 5 ersichtlich, die zur Führung der Spannbacken 4 vorgesehen sind und die Führungsnuten 31 aufweisen, in die die an den Spannbacken ausgebildeten Führungsprofile 30 eingesetzt werden können. Wie insbesondere auch aus der Figur 7 ersichtlich ist, wird hierdurch eine sichere Führung der Spannbacken gewährleistet. Zudem wird aus der Figur 6 der dreiteilige Aufbau des Backenführungsteils 11 deutlich. An dem dem Kopplungsteil 10 abgewandten Ende weist das Backenführungsteil 11 einen zylindrischen ersten Teilabschnitt 33 auf, an den ein kegelstumpfförmiger zweiter Teilabschnitt 34 angeformt ist, in dem die Führungsaufnahmen der Spannbacken ausgebildet sind. An dem dem Kopplungsteil 10 zugewandten Ende des Backenführungsteils 11 ist ein zylindrischer dritter Teilabschnitt 35 ausgebildet, der zur Kopplung des Backenführungsteils 11 mit dem Kopplungsteil 10 dient.

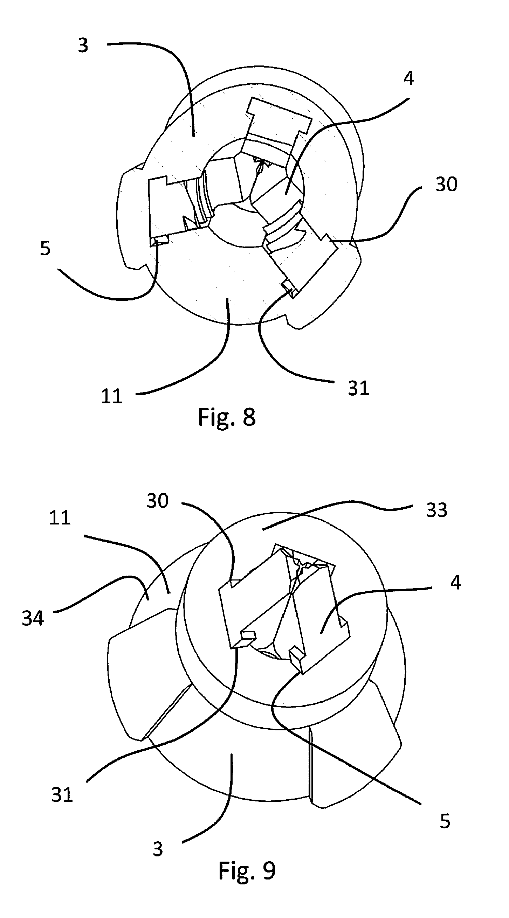

Figur 8 zeigt einen Querschnitt entlang des Schnittes VIII - VIII aus der Figur 7. Hierbei werden noch einmal die in den Führungsaufnahmen 5 ausgebildeten Führungsnuten 31 ersichtlich, die als Führung für die Führungsprofile 30 der Spannbacken 4 dienen. Durch die Führungsnuten 31 und die hierzu korrespondierenden Führungsprofile 30 ist ein Kippen der Spannbacken 4 nach innen oder nach außen effektiv verhindert.

Aus der Figur 9 ist zudem ersichtlich, dass der Durchmesser des kegelstumpfförmigen zweiten Teilabschnitts 34 im Bereich der die Spannbacken 4 beherbergenden Führungsaufnahmen 5 jeweils lokal vergrößert ist. Hierdurch wird insbesondere erreicht, dass die Wandstärke des Backenführungsteils 11 homogen bleibt, wodurch herstellungsinduzierte Spannungen, die häufig beim Abkühlen von Kunststoff entstehen, vermieden werden.

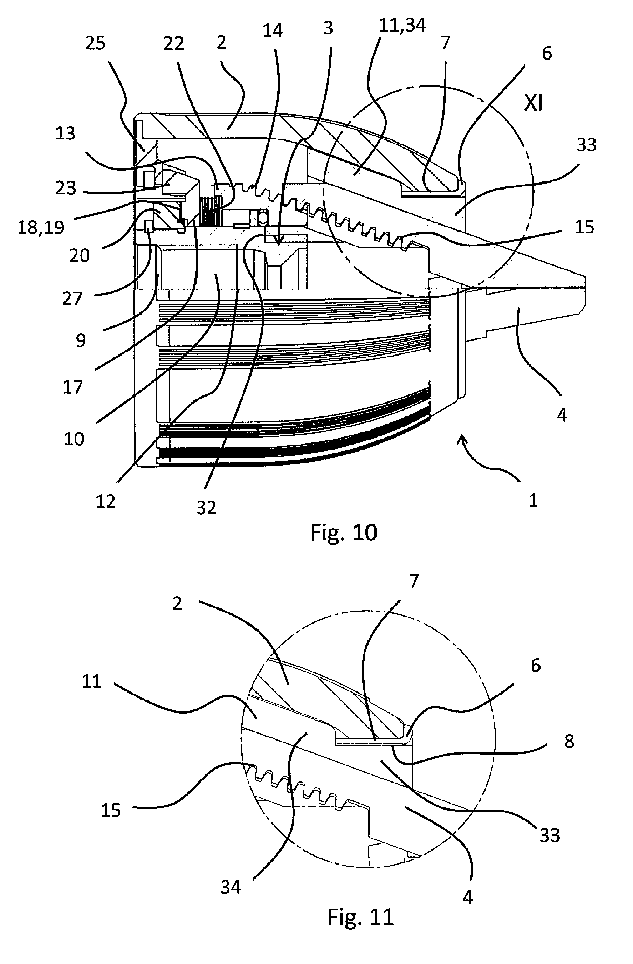

Figur 10 zeigt eine teilgeschnittene Ansicht der ersten Ausführungsform des erfindungsgemäßen Bohrfutters 1 in der Bohrkonfiguration. Die Sperrverzahnung 18 des Sperrringes 17 steht dabei im Verzahnungseingriff mit der Gegenverzahnung 19, die dem Futterkörper 3 zugeordnet ist. An dem der Abschlussscheibe abgewandten Ende der Spannhülse 2 ist die Sicherungshülse 7 angebracht, die - wie insbesondere dem in der Figur 11 dargestellten Detail XI entnommen werden kann - mit der innenumfangsseitig ausgebildeten Verzahnung 8 auf den zylindrischen ersten Teilabschnitt 33 des Backenführungsteils 11 aufgepresst ist und diesen lokal verstärkt. Zudem ist dem Detail XI auch zu entnehmen, dass die Spannhülse 2 durch den Ringbund 6, der der Sicherungshülse 7 zugeordnet ist, axial gesichert ist.

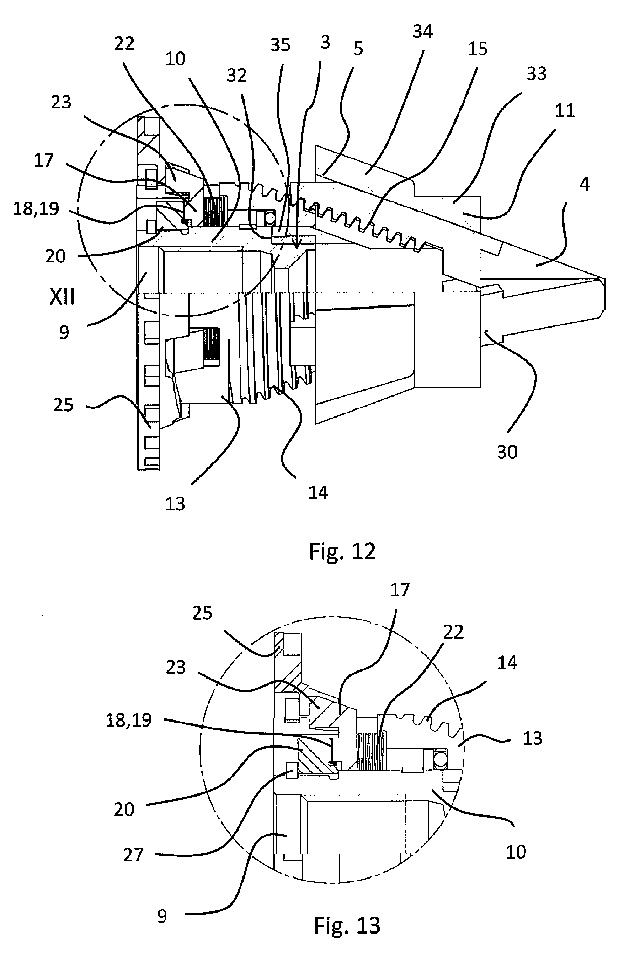

Der Figur 12 und dem in der Figur 13 dargestellten Detail XIII ist zu entnehmen, dass in der Bohrkonfiguration, die in der Zeichnung dargestellt ist, der Verzahnungseingriff zwischen der Sperrverzahnung 18 und der korrespondierenden Gegenverzahnung 19 hergestellt ist und die Steuernocke 23 in den die Bohrkonfiguration definierenden Rastsitz 28 eingerückt ist.

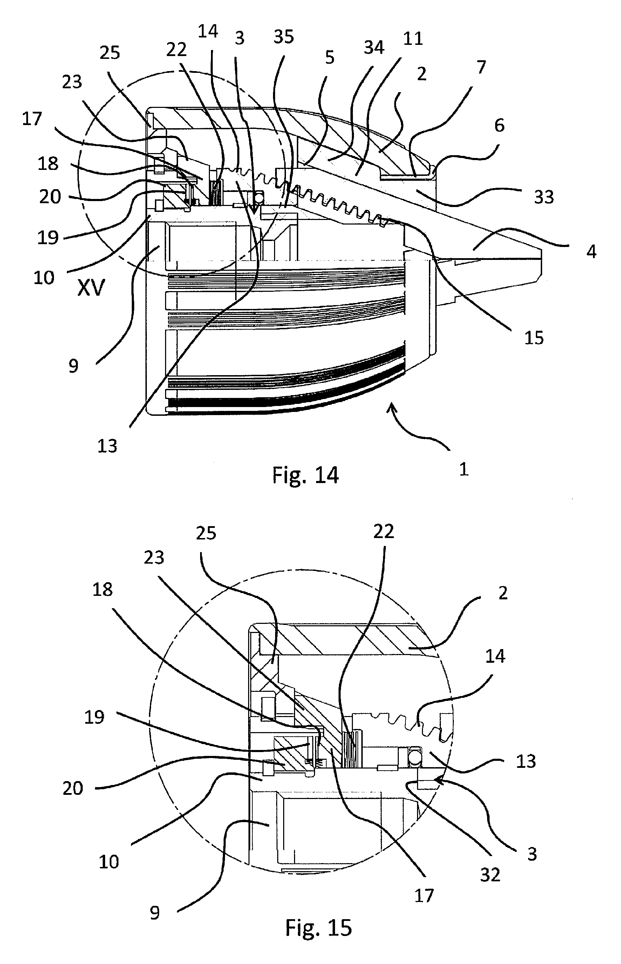

In der Spannkonfiguration, die in der Figur 14 dargestellt ist, ist - wie insbesondere dem in der Figur 15 dargestellten Detail XV zu entnehmen ist - der Verzahnungseingriff zwischen der Sperrverzahnung 18 und der dem Futterkörper 3 zugeordneten Gegenverzahnung 19 aufgehoben. Der Sperrring 17 ist entlang des Gewinderinges 13 durch die an der Abschlussscheibe 25 ausgebildete Steuerkurve 24 entgegen dem elastischen Rückstellelement 22 in Richtung der Spannbacken verstellt. Die Steuernocke 23 ist dabei in den die Spannkonfiguration definierenden Rastsitz 28 eingerückt.

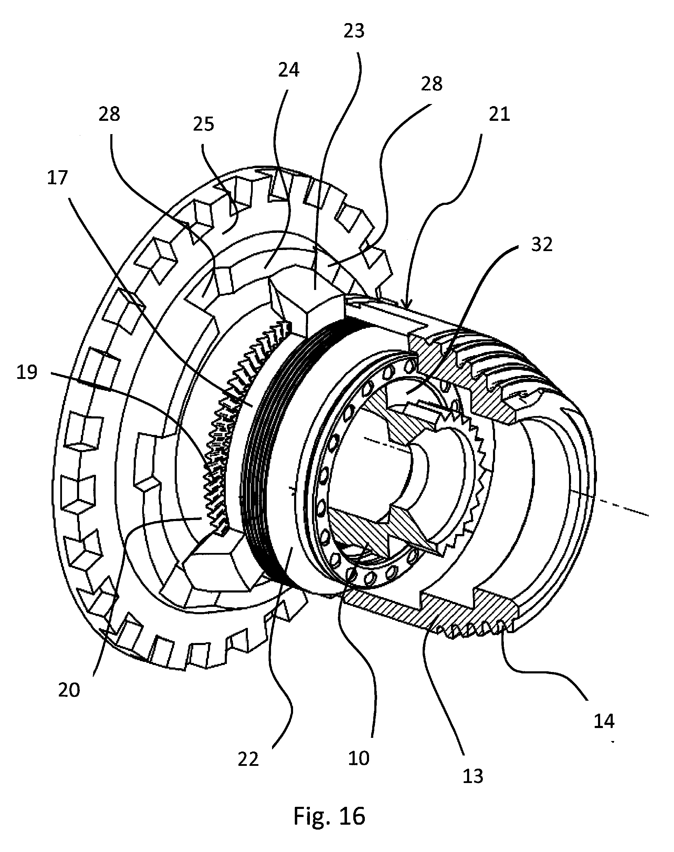

Figur 16 zeigt in einer teilgeschnittenen Ansicht wesentliche Teile der Verriegelungseinrichtung 21. Insbesondere wird auf die Gestaltung der in der Abschlussscheibe 25 ausgebildeten Rastsitze 28, in die die Steuernocke 23 in der Bohrkonfiguration bzw. in der Spannkonfiguration eingerückt ist, und der durch die Rastsitze 28 begrenzten Steuerkurven 24 aufmerksam gemacht.

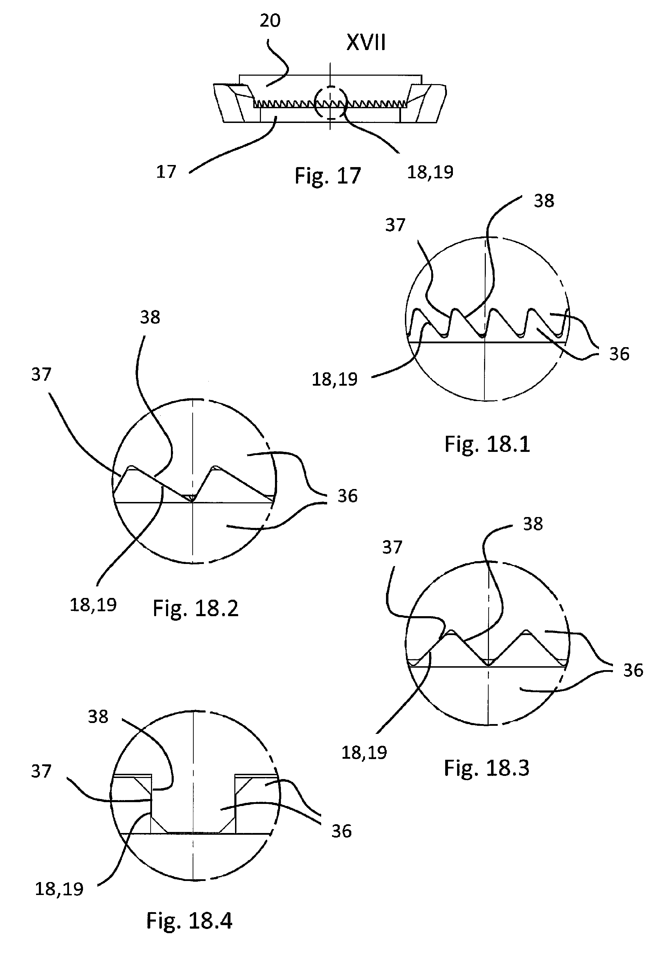

In der Figur 17 ist der Sperrring 17 gezeigt, der mit der Sperrverzahnung 18 im Eingriff mit der dem Verzahnungsring 20 Futterkörper 3 zugeordneten Gegenverzahnung 19 steht. Die Figuren 18.1-18.4 zeigen mit dem Detail XVIII aus der Figur 17 unterschiedliche Formen von Sperrverzahnung 18 und korrespondierender Gegenverzahnung 19. Die in den Figuren 18.1-18.4 dargestellten Varianten der Sperrverzahnung 18 und der Gegenverzahnung 19 sind stets aus einer Vielzahl von Sperrzähnen 36 gebildet, die jeweils eine Verriegelungsflanke 37 und eine Nachspannflanke 38 aufweisen. Die Steigung der Verriegelungsflanke 37 ist den in den Figuren 18.1-18.4 stets gleich oder größer als die Steigung der Nachspannflanke 38, die in den Figuren 18.1-18.3 stets 45° beträgt. Die Steigung der Verriegelungsflanke 37 beträgt 80° in der Figur 18.1, 60° in der Figur 18.2 und 45° in der Figur 18.3. Je steiler die Steigung der Verriegelungsflanke 37 ist, desto mehr Kraftaufwand ist nötig, um ein Notöffnen der Verriegelungseinrichtung 21 zu gewährleisten. Durch die recht flache Steigung der Nachspannflanke 38 ist ein Nachspannen des Bohrfutter 1 in der Bohrkonfiguration mit nur einem geringen Kraftaufwand möglich. Bei dem in der Figur 18.4 dargestellten Sperrzähnen ist die Verriegelungsflanke 37 parallel zu der Nachspannflanke 38 und weisen eine Steigung von 90° auf. In diesem Fall ist weder ein Nachspannen noch ein Notöffnen des verriegelten Bohrfutter 1 möglich.

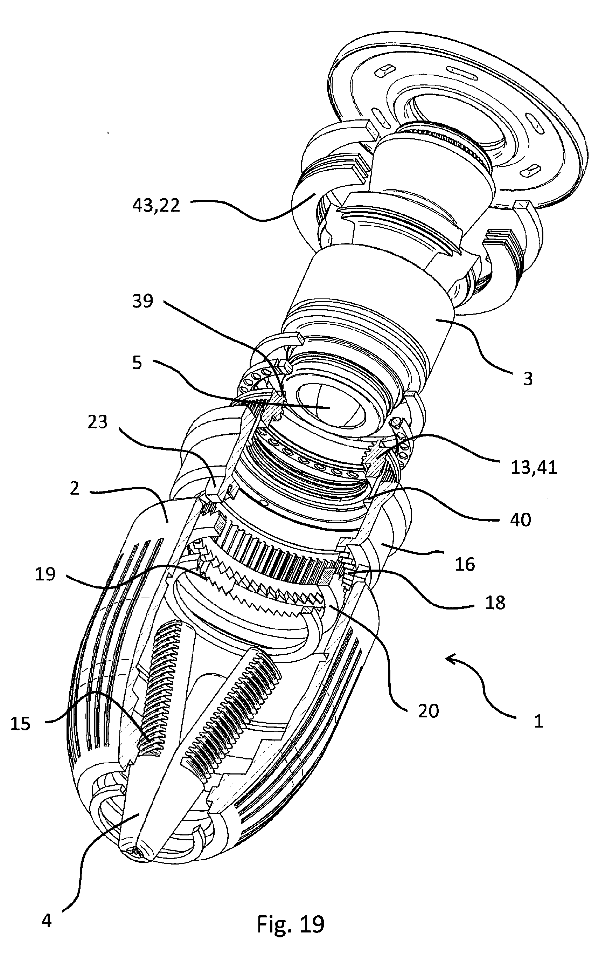

Figur 19 zeigt eine zweite Ausführungsform des erfindungsgemäßen Bohrfutters 1, bei dem der Futterkörper 3 einstückig gebildet ist. Zur Verstellung der Spannbacken 4, die in den Führungsaufnahmen 5 des Futterkörpers 3 geführt sind, ist der Gewindering 13 vorgesehen, der mit einem Innengewinde 39 mit den an den Spannbacken 4 ausgebildeten Zahnreihen 15 in Eingriff steht. An dem Gewindering 13 ist außenumfangseitig eine Verzahnungshülse 40 angeordnet, die drehfest mit der Sperrhülse 16 gekoppelt ist. Die Sperrhülse 16 selbst ist dabei axial an der Verzahnungshülse 40 verschiebbar. In dem gezeigten Ausführungsbeispiel sind an der Sperrhülse 16 die Steuernocken 23 ausgebildet, die durch die an der Spannhülse 2 ausgebildeten Steuerkurven 24 beaufschlagbar sind. Auch hier sind die Steuerkurven 24 jeweils durch Rastsitze 28 begrenzt, die die Bohrkonfiguration und die Spannkonfiguration definieren. Somit lässt sich hier durch ein Verdrehen der Spannhülse 2 die Sperrhülse 16 axial gegen das als eine Wellenfeder 43 gebildete elastische Rückstellelement 22 verstellen und dadurch zwischen der Spannkonfiguration und der Bohrkonfiguration schalten. Ausgehend von der Bohrkonfiguration und geschlossenen Spannbacken 4 wird hierbei zunächst der Verzahnungseingriff, der zwischen der Sperrverzahnung 18 der Sperrhülse 16 und der dem Verzahnungsring 20 zugeordneten Gegenverzahnung 19 gelöst. Es kommt dabei zu einer durch die Rastsitze 28 begrenzten Relativdrehung zwischen der Spannhülse 2 und der Sperrhülse 16 und die Steuernocken 23 rücken in die die Spannkonfiguration definierenden Rastsitze 28 ein. Das Bohrfutter 1 befindet sich nun in der Spannkonfiguration. Wird nun der Antrieb einer mit dem Bohrfutter 1 gekoppelten Bohrmaschine betätigt, oder wird die Spannhülse in dieser Konfiguration weiter manuell verstellt, so kommt es zu einer Relativdrehung des Gewinderinges 13 und dem Futterkörper 3, wodurch die in dem Futterkörper 3 geführten Spannbacken 4 geöffnet werden.

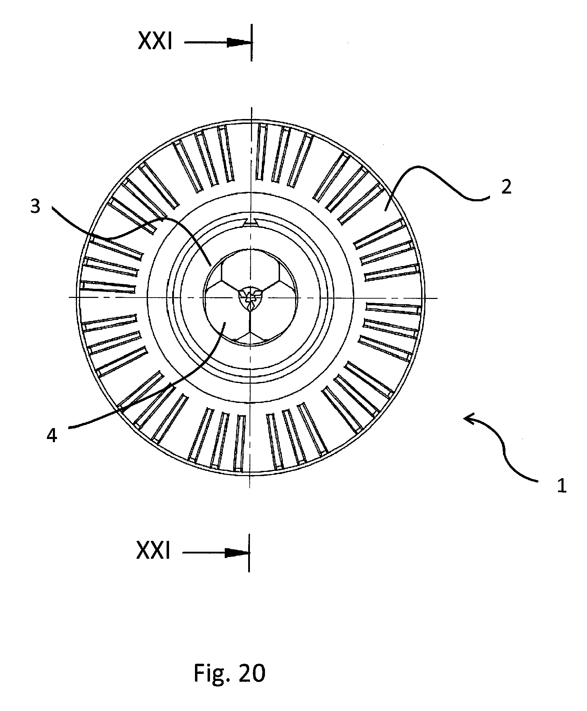

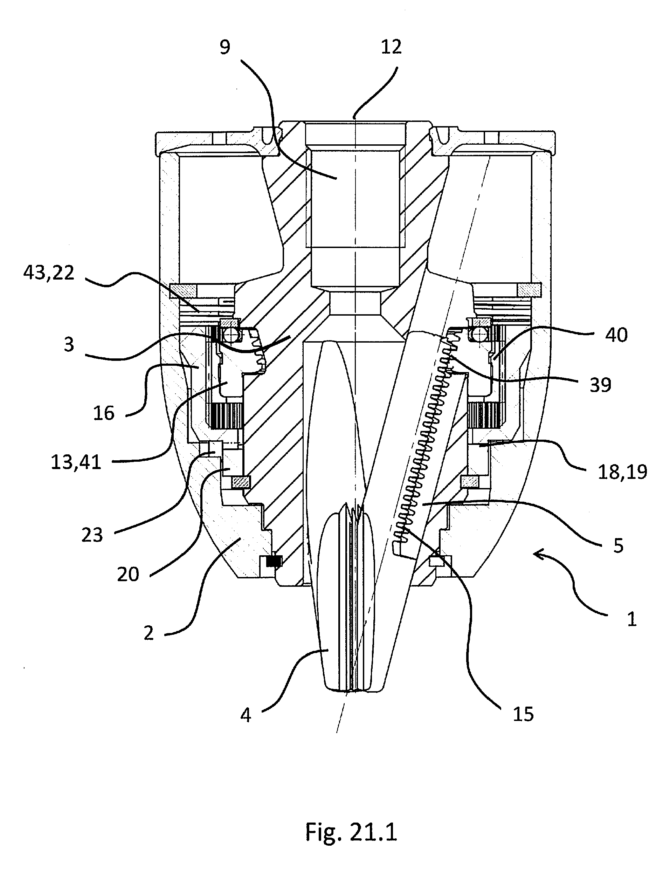

In der Figur 20 ist eine Draufsicht auf das erfindungsgemäße Bohrfutter 1 mit geschlossenen Spannbacken 4 zu erkennen. Figur 21.1 zeigt einen Längsschnitt entlang des in der Figur 20 dargestellten Schnittes XXI - XXI durch die zweite Ausführungsform. Aus der Schnittansicht wird insbesondere ersichtlich, dass der Gewindering 13 mehrteilig aus einem hälftig geteilten, das Innengewinde 39 tragenden Ring 41 und aus der den hälftig geteilten Ring 41 verbindenden Verzahnungshülse 40 gebildet ist. Die Verzahnungshülse 40 ist in dem gezeigten Ausführungsbeispiel so angeordnet, dass das elastische Rückstellelement 22 die Sperrhülse 16 stets gegen den Verzahnungsring 20 verstellt, wodurch der Verzahnungseingriff, der zwischen der Sperrverzahnung 18 und der korrespondierenden Gegenverzahnung 19 ausgebildet ist, verstärkt wird.

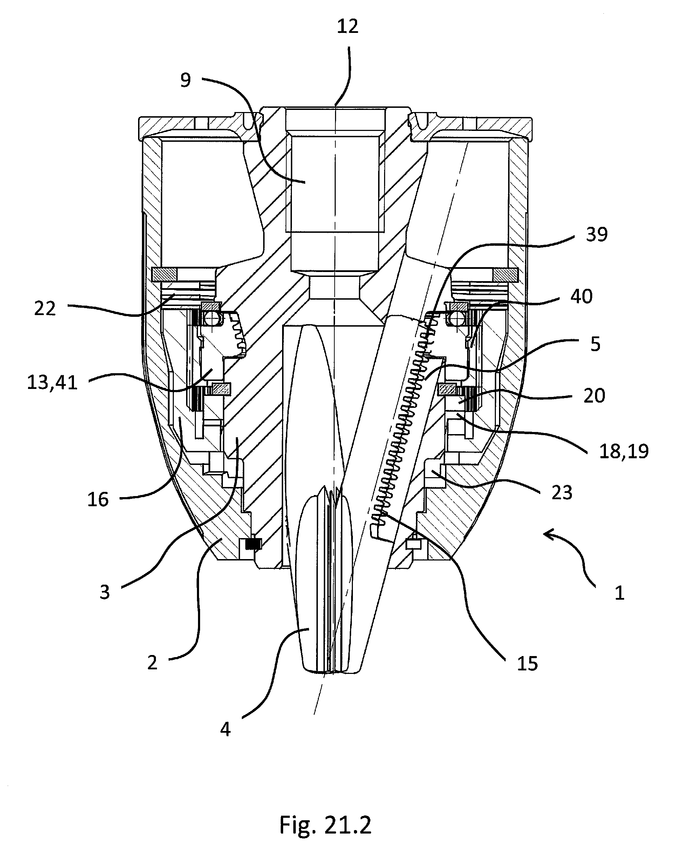

Bei der in der Figur 21.2 dargestellten Schnittansicht entlang des Schnittes XXI - XXI aus der Figur 20 ist eine dritte Ausführungsform des erfindungsgemäßen Bohrfutters 1 gezeigt. Hierbei ist die axiale Anordnung der Gegenverzahnung 19, die dem Verzahnungsring 20 zugeordnet ist, und der Sperrverzahnung 18 vertauscht. Der Verzahnungseingriff der dritten Ausführungsform, die in der Figur 21.2 dargestellt ist, ist jedoch aufgrund des axialen Kopfspiels der Spannhülse 2 leicht beeinträchtigt, da das elastische Rückstellelement 22 die Sperrverzahnung 18 in der Bohrkonfiguration aus dem Verzahnungseingriff drückt.

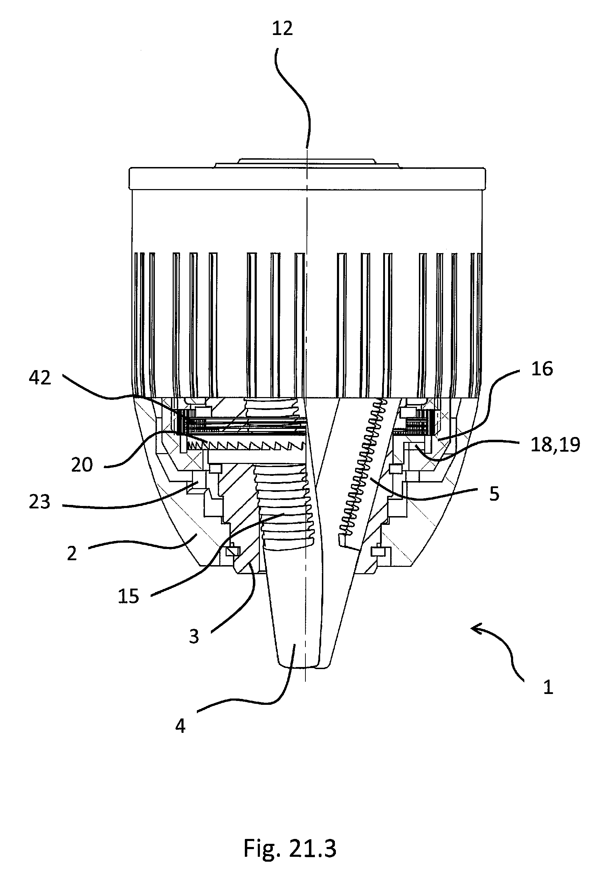

In einer vierten Ausführungsform, die in der Figur 21.3 dargestellt ist, wird der Verzahnungsring 20 axial durch ein an dem Futterkörper abgestütztes Federelement 42 beaufschlagt, um das vorhandene Kopfspiel zu eliminieren und den Verzahnungseingriff zu verstärken.

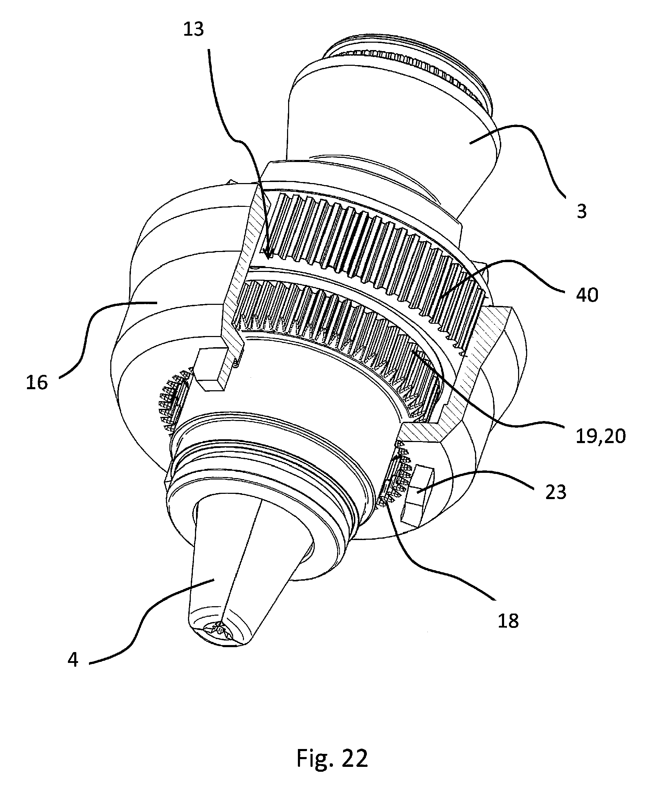

In der Figur 22 ist ein fünftes Ausführungsbeispiel des erfindungsgemäßen Bohrfutters 1 dargestellt, bei dem die Verriegelungseinrichtung 21 in radialer Richtung wirkt. Wie der Figur 22 entnommen werden kann, ist die dem Futterkörper 3 zugeordnete Gegenverzahnung 19 dabei radial orientiert. Durch die axiale Verstellung der Sperrhülse 16, die über die Verzahnungshülse 40 an dem Gewindering 13 geführt ist, kann auch hier in bereits beschriebener Weise der Gewindering 13 drehfest mit dem Futterkörper 4 gekoppelt werden.

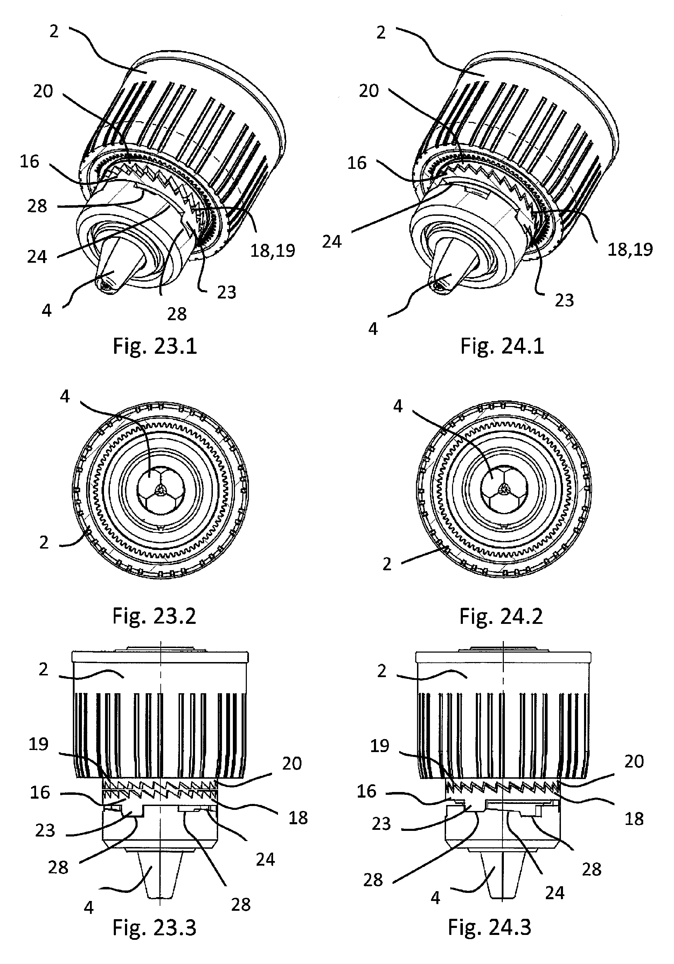

In den Figuren 23.1 - 23.3 ist in einer teilgeschnittenen Ansicht die dritte Ausführungsform des erfindungsgemäßen Bohrfutters 1 in der Spannkonfiguration dargestellt. Figur 23.1 zeigt dabei eine perspektivische Ansicht, Figur 23.2 zeigt eine Draufsicht und in der Figur 23.3 ist eine Seitenansicht der teilgeschnittenen dritten Ausführungsform dargestellt. Wie insbesondere der Figur 23.1 und der Figur 23.3 entnommen werden kann, sind die der Sperrhülse 16 zugeordneten Steuernocken 23 in die die Spannkonfiguration definierenden Rastsitze 28 eingerückt, die in der Spannhülse ausgebildet sind. Dabei sind die Rastsitze 28, die die Spannkonfiguration definieren, tiefer als die die Bohrkonfiguration definierenden Rastsitze 28.

Soll bei auseinandergefahrenen Spannbacken 4 ein Werkzeugschaft gespannt werden, so werden durch eine Relativdrehung zwischen dem Futterkörper 3 und dem Gewindering 13, der über die Sperrhülse 16 mit der Spannhülse 2 im Eingriff steht, die in dem Futterkörper 3 geführten Spannbacken 4 verstellt. Kommen die Spannbacken 4 zur Anlage an den zu spannenden Werkzeugschaft, so werden die Steuernocken 23, die der Sperrhülse 16 zugeordnet sind, aus den die Spannkonfiguration definierenden Rastsitzen 28 verstellt und entlang der an der Spannhülse 2 ausgebildeten Steuerkurven 24 in die die Bohrstellung definierenden Rastsitze 28 überführt und dabei axial gegen das elastische Rückstellelement 22 verstellt. Die Steuernocken 23 rücken in die die Bohrkonfiguration definierende Rastsitze ein und das Bohrfutter befindet sich nun in der in den Figuren 24.1 - 24.3 dargestellten Bohrkonfiguration. Der Verzahnungseingriff zwischen der Sperrverzahnung 18 und der korrespondierenden Gegenverzahnung 19 ist geschlossen und eine Relativdrehung zwischen dem Gewindering 13 und dem Futterkörper 3 ist somit ausgeschlossen.

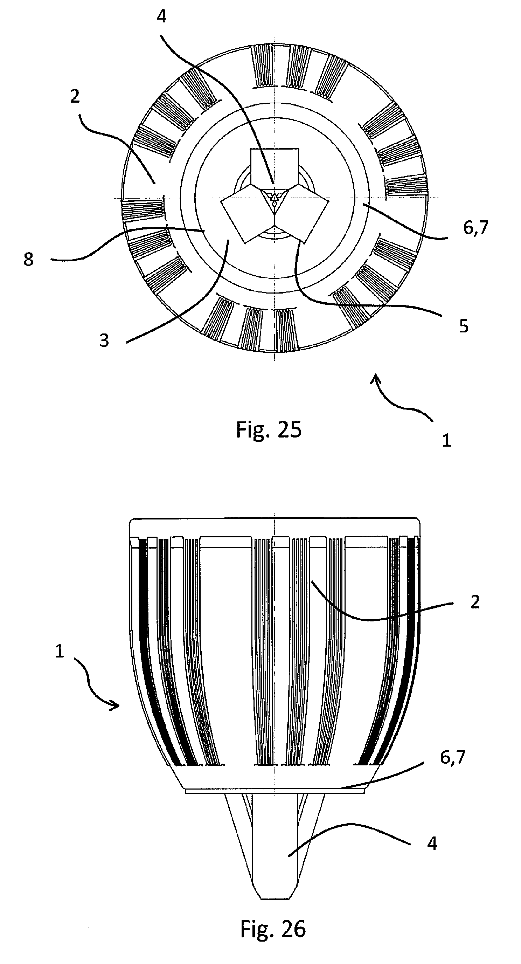

Figur 25 zeigt eine Seitenansicht einer weiteren Ausführungsform des erfindungsgemäßen Bohrfutters 1 mit trapezförmigen Spannbacken 4. Die Spannbacken 4 sind auch hier ebenfalls in den Führungsaufnahmen 5 geführt, die in dem Futterkörper 3 ausgebildet sind. In der Figur 26 ist die weitere Ausführungsform des Bohrfutters mit trapezförmigen Spannbacken 4 in einer Seitenansicht gezeigt. Insbesondere wird hierbei auch der die Spannhülse 2 axial sichernde Ringbund 6 der auf den Futterkörper 3 aufgepressten Sicherungshülse 7 erkennbar.

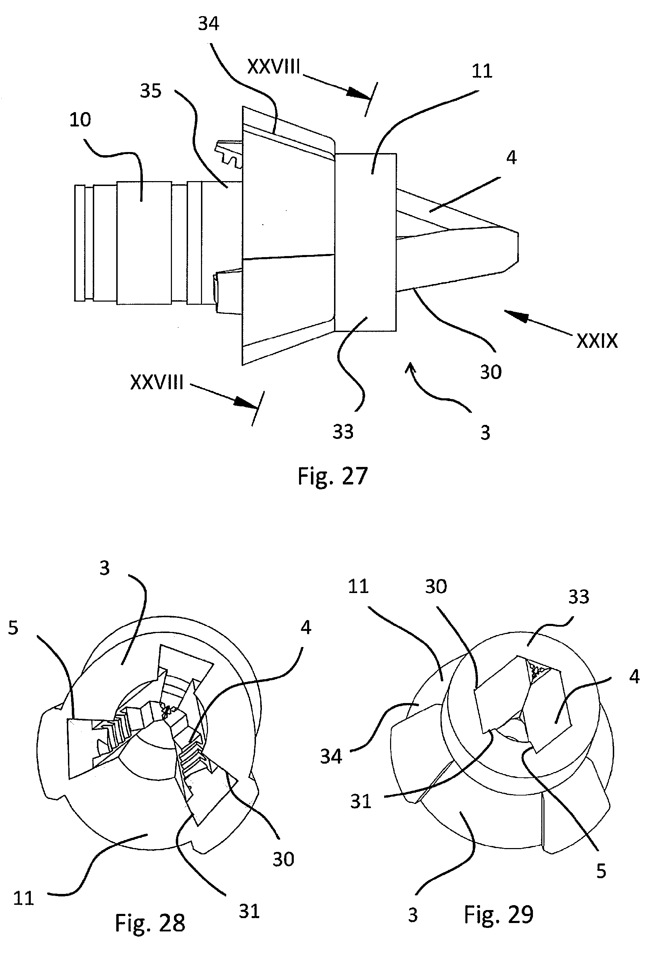

Figur 27 zeigt eine Seitenansicht des Futterkörpers 3 mit den trapezförmigen Spannbacken 4, die in dem Backenführungsteil 11 des Futterkörpers 3 geführt sind.

Aus der in der Figur 28 dargestellten Schnittansicht des Futterkörpers 3 entlang des Schnittes XXVIII-XXVIII aus der Figur 27 werden insbesondere der trapezförmige Querschnitt der Spannbacken 4 und der hierzu korrespondierende Querschnitt der in dem Backenführungsteil 11 ausgebildeten Führungsaufnahmen 5 ersichtlich. Durch den als Führungsprofil 30 dienenden, trapezförmigen Querschnitt der Spannbacken 4 und die hierzu korrespondierende Gestaltung der Führungsaufnahmen 5, die als Führungsnuten 31 wirken, wird insbesondere ein Kippen der Spannbacken 4 verhindert.

Wie zudem der in der Figur 29 dargestellten perspektivischen Ansicht auf den Futterkörper 3 entnommen werden kann, ist auch bei dieser Ausführungsform das Backenführungsteil 11 im Bereich der die trapezförmigen Spannbacken 4 beherbergenden Führungsaufnahmen 5-also in dem kegelstumpfförmigen zweiten Teilabschnitt 34 - lokal vergrößert.

Im Folgenden wird die Funktionsweise des erfindungsgemäßen Bohrfutters noch einmal erläutert.

In der Spannkonfiguration ist die Spannhülse 16 / der Sperrring 17 axial gegen das elastische Rückstellelement 22 verstellt und die Sperrverzahnung 18 befindet sich nicht im Eingriff mit der Gegenverzahnung 19. Die Steuernocke 23 ist dabei in den die Spannkonfiguration definierenden Rastsitz 28 eingerückt. Betätigt der Nutzer den Antrieb einer mit dem Bohrfutter 1 verbundenen Bohrmaschine, so kommt es zu einer Relativdrehung zwischen dem Futterkörper 3 und dem Gewindering 13, wodurch -je nach Laufrichtung der Bohrmaschine - die Spannbacken 4 geschlossen oder geöffnet werden. Alternativ kann der Nutzer die Spannhülse manuell verdrehen, um die Spannbacken 4 zu verstellen. Dabei wird die Drehung der Spannhülse 2 über die Sperrhülse 16 / den Sperrring 17 und auf den Gewindering 13 übertragen. Kommen die Spannbacken 4 zur Anlage an einen zu spannenden Werkzeugschaft, so erhöht sich der Widerstand und die Steuernocke 23 wird aus dem die Spannstellung definierenden Rastsitz 28 ausgerückt und es kommt zu einer durch die Rastsitze 28 begrenzten Relativdrehung zwischen der Spannhülse 2 und dem Gewindering 13. Die Steuernocke 23 wird dabei entlang der Steuerkurve 24, die zwischen den Rastsitzen 28 ausgebildet ist, geführt und durch das elastische Rückstellelement 22 in die Bohrkonfiguration überführt, in der die Steuernocke 23 in den die Bohrkonfiguration definierenden Rastsitz 28 eingerückt ist. Dadurch befindet sich die Sperrverzahnung 18 nun im Eingriff mit der Gegenverzahnung 19. Wird der Antrieb weiter betätigt oder wird die Spannhülse 2 weiter in die Spannrichtung verdreht, so ist durch eine geeignete Wahl der Sperrverzahnung 18 und der Gegenverzahnung 19 ein Nachspannen möglich, das heißt, dass der Verzahnungseingriff durch ein Zurückweichen der Sperrverzahnung 18 gelöst wird und die Sperrverzahnung 18 über die Gegenverzahnung 19 rutscht. Beim Öffnen der Spannbacken 4 erfolgt die Verstellung in umgekehrter Reihenfolge.

Ausgehend von der Bohrkonfiguration, bei der die Sperrverzahnung 18 im Eingriff mit der Gegenverzahnung 19 steht, wird bei einer Drehung der Spannhülse 2 der Verzahnungseingriff zwischen der Sperrverzahnung 18 und der Gegenverzahnung 19 gelöst und die Sperrhülse 16 / der Sperrring 17 wird durch die Steuerkurve 24 am Gewindering 13 axial verstellt und rückt dann in den die Spannkonfiguration definierenden Rastsitz 28 ein. Nun können durch eine Betätigung eines mit dem Futterkörper 3 gekoppelten Antriebs einer Bohrmaschine, dessen Laufrichtung im Vergleich zum Spannvorgang verändert wurde, die Spannbacken 3 geöffnet werden. Alternativ kann die Relativdrehung zwischen dem Futterkörper und dem Gewindering auch durch ein manuelles Verdrehen der Spannhülse 2 erfolgen.

Sollte bei gespannten Spannbacken 4 ein manuelles Verdrehen der Spannhülse 2 zum Lösen des Verriegelungseingriffes aufgrund einer blockierten Verriegelungseinrichtung 21 nicht möglich sein, wie dies insbesondere im Schlagbohrbetrieb auftreten kann, so kann durch die geeignete Wahl der Steigung der Verriegelungsflanken 37 ein Notlösen durch den mit dem Futterkörper 3 gekoppelten Antrieb einer Bohrmaschine ermöglicht werden. Alternativ kann der Nutzer die Spannhülse 2 manuell mit erhöhtem Kraftaufwand verdrehen.

### Bezugszeichenliste

- 1: Bohrfutter
- 2: Spannhülse
- 3: Futterkörper
- 4: Spannbacken
- 5: Führungsaufnahmen
- 6: Ringbund
- 7: Sicherungshülse
- 8: Verzahnung
- 9: Spindelaufnahme
- 10: Kopplungsteil
- 11: Backenführungsteil
- 12: Futterachse
- 13: Gewindering
- 14: Außengewinde
- 15: Zahnreihe
- 16: Sperrhülse
- 17: Sperrring
- 18: Sperrverzahnung
- 19: Gegenverzahnung
- 20: Verzahnungsring
- 21: Verriegelungseinrichtung
- 22: elastisches Rückstellelement
- 23: Steuernocke
- 24: Steuerkurve
- 25: Abschlussscheibe
- 26: erste Sicherungsnut
- 27: erster Sprengring
- 28: Rastsitz
- 29: Sicherungsstruktur
- 30: Führungsprofil
- 31: Führungsnut
- 32: Kragen
- 33: zylindrischer erster Teilabschnitt
- 34: kegelstumpfförmiger zweiter Teilabschnitt
- 35: zylindrischer dritter Teilabschnitt
- 36: Sperrzahn
- 37: Verriegelungsflanke
- 38: Nachspannflanke
- 39: Innengewinde
- 40: Verzahnungshülse
- 41: Ring
- 42: Federelement
- 43: Wellenfeder
- 44: zweite Sicherungsnut
- 45: zweiter Sprengring

## Patentansprüche

1. Bohrfutter mit einem Futterkörper (3), an dem ein Gewindering (13) geführt ist, der zum Verstellen von in dem Futterkörper (3) geführten Spannbacken (4) mit einem Gewinde im Eingriff mit den Spannbacken (4) zugeordneten Zahnreihen (15) steht, sowie mit einer den Futterkörper (3) umgebenden und mit dem Gewindering (13) drehmomentübertragend koppelbaren Spannhülse (2), die durch eine Verriegelungseinrichtung (21) mit dem Futterkörper (3) koppelbar ist, **dadurch gekennzeichnet, dass** die Verriegelungseinrichtung (21) durch eine eine Sperrverzahnung (18) aufweisende und mit dem Gewindering (13) drehfest gekoppelte Sperrhülse (16), die relativ zu dem Gewindering (13) und der Spannhülse (2) zwischen einer Bohrkonfiguration und einer Spannkonfiguration axial verschiebbar ist, und durch eine dem Futterkörper (3) zugeordnete Gegenverzahnung (19) gebildet ist.

2. Bohrfutter nach Anspruch 1, **dadurch gekennzeichnet, dass** der zwischen der Sperrverzahnung (18) der Sperrhülse (16) und der Gegenverzahnung (19) gebildete Verzahnungseingriff in axialer Richtung wirkt.

3. Bohrfutter nach Anspruch 1 oder 2, **dadurch gekennzeichnet, dass** die Sperrhülse (16) durch ein elastisches Rückstellelement (22) beaufschlagt ist.

4. Bohrfutter nach Anspruch 3, **dadurch gekennzeichnet, dass** das elastische Rückstellelement (22) durch eine Wellenfeder (43) gebildet ist.

5. Bohrfutter nach einem der Ansprüche 1 bis 4, **dadurch gekennzeichnet, dass** der Sperrhülse (16) mindestens eine Steuernocke (23) zugeordnet ist, die zur axialen Verstellung der Sperrhülse (16) durch eine der Spannhülse (2) mittelbar oder unmittelbar zugeordnete Steuerkurve (24) beaufschlagbar ist.

6. Bohrfutter nach Anspruch 5, **dadurch gekennzeichnet, dass** die Steuerkurve (24) durch mindestens einen die Bohrkonfiguration und/oder die Spannkonfiguration definierenden Raststitz (28) begrenzt ist.

7. Bohrfutter nach einem der Ansprüche 1 bis 6, **dadurch gekennzeichnet, dass** die Gegenverzahnung (19) an einem drehfest mit dem Futterkörper (3) verbundenen Verzahnungsring (20) ausgebildet ist.

8. Bohrfutter nach Anspruch 7, **dadurch gekennzeichnet, dass** der Verzahnungsring (20) axial gegen ein an dem Futterkörper (3) abgestütztes Federelement (43) verstellbar ist.

9. Bohrfutter nach einem der Ansprüche 1 bis 8, **dadurch gekennzeichnet, dass** der Gewindering (13) mehrteilig aus einem hälftig geteilten, ein Innengewinde (39) tragenden Ring (41) und aus einer den hälftig geteilten Ring (41) verbindenden Verzahnungshülse (40) gebildet ist, die drehfest mit der Sperrhülse (16) gekoppelt ist.

10. Bohrfutter nach einem der Ansprüche 1 bis 9, **dadurch gekennzeichnet, dass** die an der Sperrhülse (16) ausgebildete Sperrverzahnung (18) und die dem Futterkörper (3) zugeordnete und zu der Sperrverzahnung (18) korrespondierende Gegenverzahnung (19) aus einer Vielzahl von jeweils eine Verriegelungsflanke (37) und eine Nachspannflanke (38) aufweisenden Sperrzähnen (36) gebildet ist.

11. Bohrfutter nach Anspruch 10, **dadurch gekennzeichnet, dass** die Steigung der Verriegelungsflanke (37) des zwischen der Sperrverzahnung (18) und der Gegenverzahnung (19) gebildeten Verzahnungseingriffes größer oder gleich der Steigung der Nachspannflanke (38) ist.

12. Bohrfutter nach Anspruch 10 oder 11, **dadurch gekennzeichnet, dass** die Steigung der Verrieglungsflanke (37) größer als oder gleich 45°, bevorzugt größer als 60° und besonders bevorzugt größer ist als 80°ist.

13. Bohrfutter nach einem der Ansprüche 10 bis 12, **dadurch gekennzeichnet, dass** die Verriegelungsflanke (37) der Sperrzähne (36) parallel zu den Nachspannflanken (38) orientiert sind.

14. Bohrfutter nach einem der Ansprüche 1 bis 13, **dadurch gekennzeichnet, dass** die Neigung der Spannbacken (4) bezogen auf die Futterachse (12) einem Bereich entstammt, der bevorzugt zwischen 15° und 25° liegt und der besonders bevorzugt bei 20° liegt.
